# EUROPEAN PATENT APPLICATION

(11) **EP 4 521 539 A1**
(43) Date of publication of application: **12.03.2025**
(21) Application number: 24787939.8
(22) Date of filing: 31.03.2024
(51) Int. Cl.: H01M 50/367, H01M 50/342, H01M 50/289

(54) **BATTERY ASSEMBLY**

(30) Priority: 13.04.2023 CN 202320827593 U
(71) Applicant: Eve Energy Co., Ltd., Huizhou, Guangdong 516006 (CN)
(72) Inventor: HUANG, Weicai, Huizhou, Guangdong 516006 (CN)
(74) Representative: Berggren Oy
(86) International application number: PCT/CN2024/085123
(87) International publication number: WO 2024/212834

(57) **Abstract**

A battery assembly is provided. The battery assembly includes a case body, a battery cell module, and a first flame retardant plate. The battery cell module includes a plurality of sub modules. Each of the sub modules includes a plurality of battery cells. An end of each of the battery cells is provided with a pressure relief valve. The first flame retardant plate is disposed between the battery cell module and the bottom guard plate. The first flame retardant plate is provided with a pressure relief hole. A side of the first flame retardant plate adjacent to the battery cell module is adjacent to the battery cells, and a pressure relief cavity is defined between a side of the first flame retardant plate adjacent to the bottom guard plate and the bottom guard plate.

## Description

This application claims priority to and the benefit of Chinese Patent Application No. 202320827593.3, filed on April 13, 2023. The entire disclosure of the aforementioned application is incorporated herein by reference in its entirety.

### TECHNICAL FIELD

The present application relates to the technical field of batteries, specifically to a battery assembly.

### BACKGROUND

In related art, a battery assembly includes a battery case body and battery cell modules inside the battery case body. Generally, in the battery assembly, a bottom of each of the battery cell modules is spaced from a bottom surface of the battery case body to form a plurality of pressure relief channels communicated. When thermal runaway occurs in one battery cell, high-temperature flame sprays around, which easily leads to thermal runaway of adjacent battery cells.

### SUMMARY

An embodiment of the present application provides a battery assembly to improve a technical problem of heat spread caused by thermal runaway of a single battery cell.

A battery assembly provided by the embodiments of the present application includes a case body, a battery cell module, and a first flame retardant plate. The case body includes a bottom guard plate and case side plates, and an accommodating cavity is defined by the bottom guard plate and the case side plates. The battery cell module is disposed in the accommodating cavity and includes a plurality of sub modules. Each of the sub modules includes a plurality of battery cells. An end of each of the battery cells is provided with a pressure relief valve, and an opening direction of the pressure relief valve towards the bottom guard plate. The first flame retardant plate is disposed in the accommodating cavity and located between the battery cell module and the bottom guard plate. The first flame retardant plate is provided with a pressure relief hole corresponding to the pressure relief valve. The pressure relief hole penetrates through a part of the first flame retardant plate. A side of the first flame retardant plate adjacent to the battery cell module is adjacent to the battery cells, and a pressure relief cavity is defined between a side of the first flame retardant plate adjacent to the bottom guard plate and the bottom guard plate.

### BENEFICIAL EFFECTS

Beneficial effects of the present application are illustrated as follows. The battery assembly includes the case body, the battery cell module, and the first flame retardant plate. The case body includes the bottom guard plate and the case side plates. The accommodating cavity is defined by the bottom guard plate and the case side plates. The battery cell module is disposed in the accommodating cavity and includes the plurality of battery cells. Each of the sub modules includes the plurality of battery cells, the end of each of the battery cells is provided with the pressure relief valve, and the opening direction of the pressure relief valve is towards the bottom guard plate. The first flame retardant plate is disposed in the accommodating cavity and located between the battery cell module and the bottom guard plate. The first flame retardant plate is provided with the pressure relief hole corresponding to the pressure relief valve. The side of the first flame retardant plate adjacent to the battery cell module is adjacent to the battery cells, and the pressure relief cavity is defined between the side of the first flame retardant plate adjacent to the bottom guard plate and the bottom guard plate. In the embodiment of the present application, by disposing the first flame retardant plate between the battery cell module and the bottom guard plate, the first flame retardant plate is provided with the pressure relief hole corresponding to the pressure relief valve of the battery cells, and the pressure relief hole penetrates through part of the first flame retardant plate. When thermal runaway occurs in a single battery cell, high-temperature gas and flame rush out of the pressure relief valve, break through the pressure relief hole, and enter the pressure relief cavity between the first flame retardant plate and the bottom guard plate. Since the pressure relief hole of the first flame retardant plate between other battery cells and the pressure relief cavity is not broken through, other battery cells can not be affected by the high-temperature gas and flame, thereby improving the technical problem of heat spread caused by thermal runaway of the single battery cell.

### BRIEF DESCRIPTION OF THE DRAWINGS

FIG. 1 is a three-dimensional schematic diagram of a battery assembly provided by some embodiments of the present application.
FIG. 2 is an exploded schematic diagram of the battery assembly provided by some embodiments of the present application.
FIG. 3 is a top view schematic diagram of the battery assembly provided by some embodiments of the present application.
FIG. 4 is a cross-sectional schematic diagram of the battery assembly in FIG. 2 along a section line A-A.
FIG. 5 is a three-dimensional schematic diagram of a first flame retardant plate provided by some embodiments of the present application.
FIG. 6 is a top view schematic diagram of a bottom guard plate provided by some embodiments of the present application.
FIG. 7 is a partial three-dimensional schematic diagram of the battery assembly provided by some embodiments of the present application.
FIG. 8 is another partial three-dimensional schematic diagram of the battery assembly provided by some embodiments of the present application.
FIG. 9 is a three-dimensional schematic diagram of a sub module provided by some embodiments of the present application.

### Reference numerals:

10, case body; 11, bottom guard plate; 12, case side plate; 13, case cover; 20, battery cell module; 21, sub module; 210, battery cell; 211, pressure relief valve; 30, first flame retardant plate; 31, first flame retardant layer; 32, second flame retardant layer; 310, pressure relief hole; 100, pressure relief cavity; X, first direction; Y, second direction; 110, protruding rib; 111, first end of the bottom guard plate; 112, second end of the bottom guard plate; 121, first side plate; 120, pressure relief port; 14, partition beam; 122, second side plate; 1210, explosion-proof valve; 40, second flame retardant layer; 113, connecting rib; 220, bracket; 15, cross beam.

### DETAILED DESCRIPTION

The technical solutions in the embodiments of the present application will be described clearly and completely hereafter with reference to the accompanying drawings. Apparently, the described embodiments are only a part of but not all embodiments of the present application. All other embodiments obtained by persons of ordinary skill in the art based on the embodiments of the present application without creative efforts shall fall within the protection scope of the present application. In addition, it should be understood that the specific embodiments described herein are merely for explaining the present application, but not used to limit the present application. In the present application, unless otherwise specified, the directional words used such as "up" and "down" usually refer to the up and down directions of the device in actual use or working state, specifically the direction shown in the drawings. The "inside" and "outside" refer to the outline of the device.

In related art, a battery assembly includes a battery case body and battery cell modules inside the battery case body. Generally, in the battery assembly, a bottom of each of the battery cell modules is spaced from a bottom surface of the battery case body to form a plurality of pressure relief channels communicated. When thermal runaway occurs in one battery cell, high-temperature flame sprays around, which easily leads to thermal runaway of adjacent battery cells. The present application provides a battery assembly to improve a technical problem of heat spread caused by thermal runaway of the single battery cell.

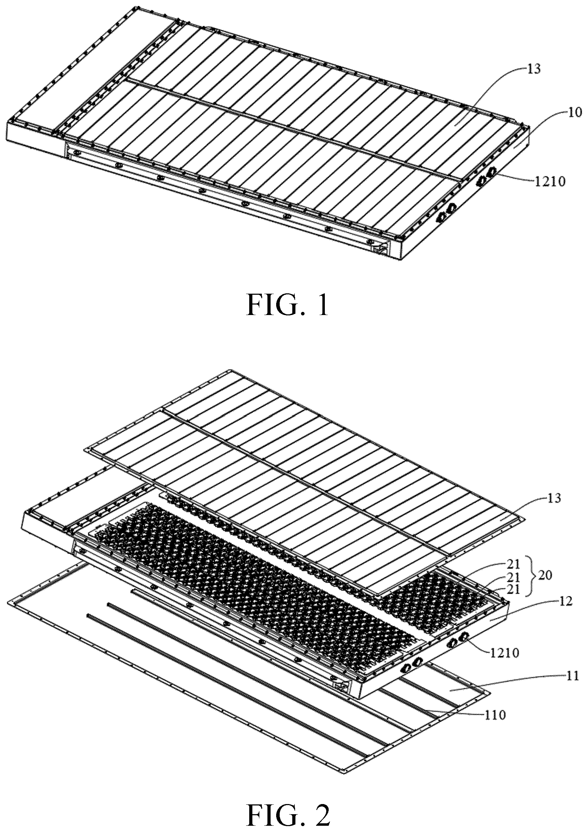

As shown in FIG. 1 to FIG. 8, the embodiments of the present application provide a battery assembly. The battery assembly includes a case body 10, a battery cell module 20, and a first flame retardant plate 30. The case body 10 includes a bottom guard plate 11 and case side plates 12. An accommodating cavity is defined by the bottom guard plate 11 and the case side plates 12. The battery cell module 20 is disposed in the accommodating cavity and includes a plurality of battery cells 21. Each of the sub modules 21 includes the plurality of battery cells 210. An end of each of the battery cells 20 is provided with a pressure relief valve 211, and the opening direction of the pressure relief valve 211 towards the bottom guard plate 11. The first flame retardant plate 30 is disposed in the accommodating cavity and located between the battery cell module 20 and the bottom guard plate 11. The first flame retardant plate 30 is provided with the pressure relief hole 310 corresponding to the pressure relief valve 211. The pressure relief hole 310 penetrates through a part of the first flame retardant plate 30. The side of the first flame retardant plate 30 adjacent to the battery cell module 20 is adjacent to the battery cells 210, and the pressure relief cavity is defined between the side of the first flame retardant plate 30 adjacent to the bottom guard plate 11 and the bottom guard plate 11.

In the embodiments of the present application, by disposing the first flame retardant plate 30 between the battery cell module 20 and the bottom guard plate 11, the first flame retardant plate 30 is provided with the pressure relief hole 310 corresponding to the pressure relief valve 211 of the battery cells 210, and the pressure relief hole 310 penetrates through part of the first flame retardant plate 30. When thermal runaway occurs in one single battery cell 210, high-temperature gas and flame rush out of the pressure relief valve 211, break through the pressure relief hole 310, and enter the pressure relief cavity 100 between the first flame retardant plate 30 and the bottom guard plate 11. Since the pressure relief hole 310 of the first flame retardant plate 30 between other battery cells 210 and the pressure relief cavity 100 is not broken through, other battery cells 210 can not be affected by the high-temperature gas and flame, thereby improving the technical problem of heat spread caused by thermal runaway of the single battery cell 210.

In some embodiments, the first flame retardant plate 30 includes at least two flame retardant layers stacked. A part of the flame retardant layers is provided with the pressure relief hole 310, and another part of the flame retardant layers covers the pressure relief hole 310. It should be noted that the number and a thickness of another part of the flame retardant layer covering the pressure relief hole 310 can be set according to needs, so that the high-temperature gas and flame can enter the pressure relief hole 310 and completely penetrate the plurality of flame retardant layers when thermal runaway occurs.

Furthermore, in some embodiments, a thickness of the flame retardant layers provided with the pressure relief hole 310 is greater than a thickness of the flame retardant layers not provided with the pressure relief hole 310, so that the thickness of the flame retardant layers covering the pressure relief hole 310 is not too thick and difficult to be broken through by the high-temperature gas and flame.

As shown in FIG. 2, the case body 10 includes the bottom guard plate 11 and the case side plates 12. The case body 10 may further include a case cover 13. The bottom guard plate 11 is located at a bottom of the case side plates 12, and the case cover 13 is closed on the case side plates 12 to form the accommodation cavity. The battery cell module 20 is disposed in the accommodating cavity. The battery cell module 20 includes the plurality of sub modules 21 connected in parallel or in series, so that the battery assembly can meet requirements of rated voltage and current.

As shown in FIG. 2 to FIG. 4, each of the sub modules 21 includes a plurality of battery cells 210. The end of each of the battery cells 210 towards the bottom guard plate 11 is provided with the pressure relief valve 211. When thermal runaway occurs in the battery cells 210, the high-temperature gas and flame inside the battery cells 210 break through the pressure relief valve 211 and spray out along the opening direction of the pressure relief valve 211.

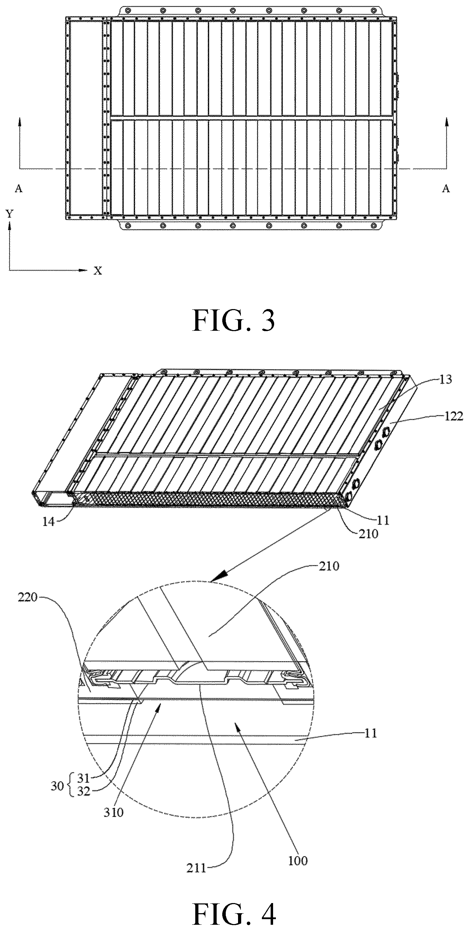

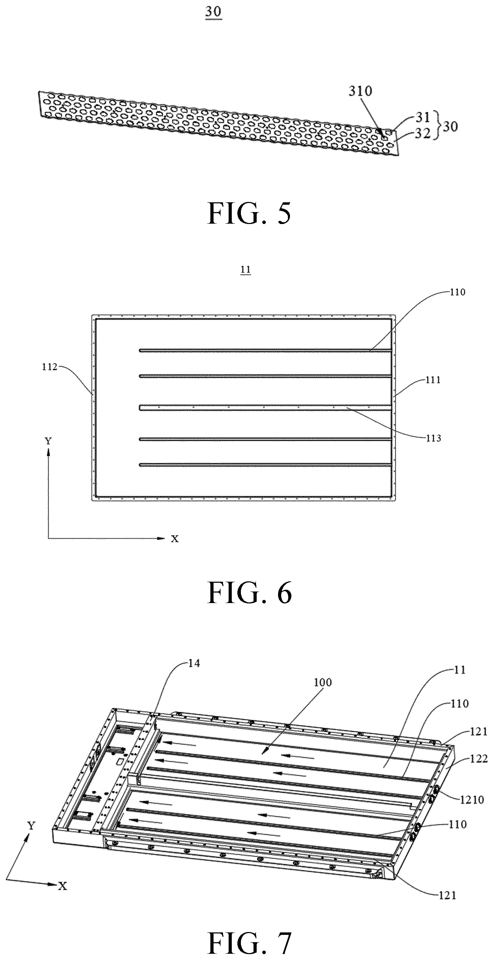

As shown in FIG. 4, the first flame retardant plate 30 is disposed at a side of the pressure relief valve 211 towards the bottom guard plate 11. The first flame retardant plate 30 is provided with the pressure relief hole 310 corresponding to the pressure relief valve 211. The pressure relief hole 310 does not completely penetrate through the first flame retardant plate 30. As shown in FIG. 5, FIG. 5 shows a three-dimensional diagram of the first flame retardant plate 30. It should be noted that only a part of the first flame retardant plate 30 of the battery assembly is shown in FIG. 5.

When the high-temperature gas and flame inside the battery cells 210 spray out along the opening direction of the pressure relief valve 211, the bottom material of the pressure relief hole 310 can be broken through, so that the bottom material is penetrated through to form a through hole, and the high-temperature gas and flame enter the pressure relief cavity 100 formed by the first flame retardant plate 30 and the bottom guard plate 11 along the through hole. For other battery cells 210 not experiencing thermal runaway, the pressure relief hole 310 below the battery cells 210 is not broken through, and the high-temperature gas and flame are blocked by the bottom material of the pressure relief hole 310, thereby preventing other battery cells 210 from being ignited.

It should be noted that a thickness of the part of the first flame retardant plate 30 not being penetrated can be reasonably set, so as to ensure that the high-temperature gas and flame can smoothly break through the bottom material of the pressure relief hole 310, and the bottom material can be penetrated through to form the through hole.

In some embodiments, a shape of the pressure relief hole 310 may be adapted to a shape of the pressure relief valve 211. For example, when the shape of the pressure relief valve 211 is circular, the shape of the pressure relief hole 310 may also be circular. An aperture of the pressure relief hole 310 may be greater than or equal to an aperture of an opening of the pressure relief valve 211, so that the high-temperature gas and flame can be discharged unimpeded.

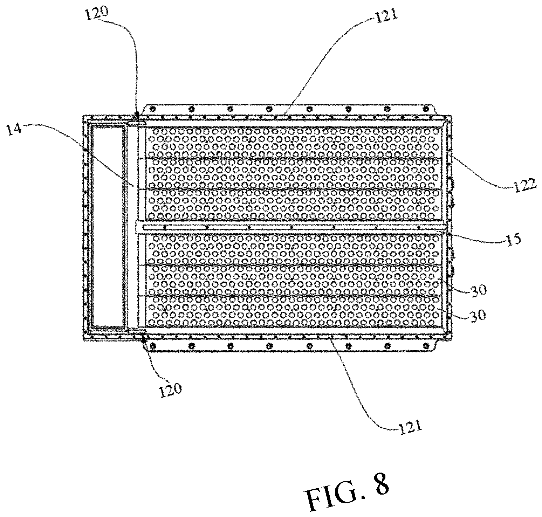

As shown in FIG. 8, the battery assembly may include a plurality of first flame retardant plates 30. The plurality of first flame retardant plates 30 can be spliced into a large flat plate structure. An area of the first flame retardant plate 30 can be adjusted according to a plane area sub modules 21. In some embodiments, an orthographic projection of each of the sub modules 21 on the first flame retardant plate 30 is located within the first flame retardant plate 30. With above arrangement, firstly, the first flame retardant plate 30 and the sub modules 21 can be assembled, and then, the assembled sub modules 21 are placed in the case body 10, thereby simplifying an assembly process of the first flame retardant plate 30.

In some embodiments, one battery assembly may also include only one first flame retardant board 30. A plane area of the first flame retardant board 30 is slightly less than a plane area of the bottom guard plate 11. The present application does not limit the number and the size of the first flame retardant plate 30.

In some embodiments, as shown in FIG. 5, FIG. 8, and FIG. 9, the battery cells 210 may be cylindrical battery cells. An edge of the first flame retardant plate 30 may be provided with a same circular arc structure as the battery cells 210, so that an orthographic projection of the sub modules 21 on the first flame retardant plate 30 is located within the first flame retardant plate 30, thereby ensuring a minimum distance between the pressure relief hole 310 on the first flame retardant plate 30 and the edge of the first flame retardant plate 30, and ensuring a structural strength of the first flame retardant plate 30.

The technical solution of the present application is now described in connection with specific embodiments.

In one embodiment, as shown in FIG. 3 and FIG. 4, FIG. 3 is a top view schematic diagram of the battery assembly provided by some embodiments of the present application, and FIG. 4 is a cross-sectional schematic diagram of the battery assembly in FIG. 2 along a section line A-A. The first flame retardant plate 30 includes a first flame retardant layer 31 and a second flame retardant layer 32 stacked. The first flame retardant layer 31 is located on a side of the second flame retardant layer 32 adjacent to the battery cell module 20. A thickness of the first flame retardant layer 31 is less than a thickness of the second flame retardant layer 32. The second flame retardant layer 32 is provided with the pressure relief hole 310 corresponding to the pressure relief valve 211.

The first flame retardant plate 30 is a flat structure and is located between the pressure relief valve 211 of the battery cells 210 and the bottom guard plate 11. The thickness of the first flame retardant plate 30 is a dimension perpendicular to a flat surface of the first flame retardant plate 30. The first flame retardant plate 30 may include the first flame retardant layer 31 and a second flame retardant layer 32 stacked. The first flame retardant layer 31 is located between the pressure relief valve 211 and the second flame retardant layer 32, and the thickness of the first flame retardant layer 31 is less than the thickness of the second flame retardant layer 32. The thickness of the first flame retardant layer 31 can be adjusted according to needs, thereby ensuring that the high-temperature gas and flame can smoothly break through the first flame retardant layer 31 to be discharged along the pressure relief hole 310.

In one embodiment, a material of the first flame retardant plate 30 may be mica. The first flame retardant layer 31 may be mica paper, and the second flame retardant layer 32 may be mica plate. The mica plate is provided with the pressure relief hole 310 corresponding to the pressure relief valve 211, and the high-temperature gas and flame sprayed from the pressure relief valve 211 can break through the mica paper to be discharged along the pressure relief hole 310. By providing the mica plate on a side of the mica paper adjacent to the bottom guard plate 11, when the mica paper is broken through by the high-temperature gas and flame, the mica paper may be compressed by the mica plate to prevent the mica paper from falling off.

As shown in FIG. 5, in one embodiment, the first flame retardant layer 31 is not provided with the pressure relief hole 310, and the second flame retardant layer 32 is provided with the pressure relief hole 310.

When the high-temperature gas and flame inside the pressure relief valve 211 of one single battery cell 210 break through the pressure relief valve 211 and spray out, the high-temperature gas and flame can break through the first flame retardant layer 31 and enter the pressure relief cavity 100 along the pressure relief hole 310 of the second flame retardant layer 32. Since the first flame retardant layer 31 blocks the pressure relief valve 211 and the pressure relief cavity 100 of the other battery cells 210 which do not occur thermal runaway, the other battery cells 210 which do not occur thermal runaway can not be affected by the high-temperature gas and flame, thereby avoiding heat spread caused by thermal runaway of one single battery cell 210.

In some embodiments, as shown in FIG. 4, a bracket 220 is disposed between the battery cells 210 and the first flame retardant plate 30. The bracket 220 is provided with a plurality of bearing parts matched with a shape of the battery cells 210. The battery cells 210 are disposed in the bearing parts. The bearing parts are provided with a through hole corresponding to the pressure relief valve 211. In some embodiments, a material of the bracket 220 may be plastic or other flame retardant materials, which is not limited by the present application.

As shown in FIG. 6 and FIG. 7, in one embodiment, the bottom guard plate 11 is provided with at least one protruding rib 110 extending along a first direction X. An end surface of the protruding rib 110 away from the bottom guard plate 11 abuts against the first flame retardant plate 30, and an orthographic projection of the pressure relief hole 310 on the bottom guard plate 11 is not overlapped with the protruding rib 110.

The first direction X may be a direction parallel to one side of the bottom guard plate 11.

The protruding rib 110 of the bottom guard plate 11 can be formed by stamping. The protruding rib 110 protrudes towards a side of the battery cells 210 protrudes, and the end surface of the protruding rib 110 away from the bottom guard plate 11 abuts against the first flame retardant plate 30. With the above arrangement, a pressure relief channel is defined between two adjacent protruding ribs 110 and the first flame retardant plate 30. When the battery cells 210 corresponding to the pressure relief channel occur thermal runaway, the battery cells 210 of other pressure relief channels can not be affected by thermal runaway.

In one embodiment, as shown in FIG. 6, the number of the protruding ribs 110 is four, so that the pressure relief cavity 100 is divided into six independent pressure relief channels. The number of the protruding ribs 110 can be set according to needs, and the present application does not limit the number of the protruding ribs 110.

In one embodiment, as shown in FIG. 6, a connecting rib 113 may be disposed on the bottom guard plate 11. The connecting rib 113 may be formed by stamping. The connecting rib 113 towards the side of the battery cells 210 protrudes. The connecting rib 113 is provided with a plurality of through holes for threaded connection with the case side plates 12. As shown in FIG. 8, a cross beam 15 is further disposed on the case side plates 12 and provided with a plurality of through holes for threaded connection with the connecting ribs 113. As shown in FIG. 7, FIG. 7 shows a three-dimensional schematic diagram of the bottom guard plate 11 combined with the case side plates 12. A protruding end surface of the connecting rib 113 towards the cross beam 15 abuts against an end surface of the cross beam 15 towards the connecting rib 113. The cross beam 15 and the connecting rib 113 are threaded and connected through the through holes, so that the bottom guard plate 11 and the case side plates 12 are fixed, thereby forming the accommodation cavity between the bottom guard plate 11 and the case side plates 12.

Furthermore, as shown in FIG. 6, in one embodiment, one end of the protruding rib 110 is flush with a first end 111 of the bottom guard plate 11, and another end of the protruding rib 110 is spaced from a second end 112 of the bottom guard plate 11. By disposing that the one end of the protruding rib 110 is flush with the first end 111 of the bottom guard plate 11, and the another end of the protruding rib 110 is spaced from the second end 112 of the bottom guard plate 11, so that the pressure relief channels formed by the protruding ribs 110 are communicated with each other at one end, and the high-temperature gas and flame in the pressure relief channels can be directed to be discharged from the pressure relief channels adjacent to the second end 112 of the bottom guard plate 11.

A s shown in FIG. 2 and FIG. 7, in one embodiment, the plurality of the sub modules 21 are arranged in a second direction Y perpendicular to the first direction X, and the orthographic projection of each of the sub modules 21 on the bottom guard plate 11 is located between two adjacent protruding ribs 110.

In some embodiments, the protruding ribs 110 may abut against the side of the first flame retardant plate 30 towards the bottom guard plate 11. One protruding rib 110 may support edge areas of two adjacent first flame retardant plates 30. In other words, the orthographic projection of each of the sub modules 21 on the bottom guard plate 11 may be partially overlapped with two adjacent protruding ribs 110.

By disposing the orthographic projection of each of the sub modules 21 on the bottom guard plate 11 between two adjacent protruding ribs 110, the pressure relief channels of the plurality of sub modules 21 are independent of each other, and the battery cells 210 of one single sub module 21 are not affected by thermal runaway of the battery cells 210 of the other sub modules 21, thereby preventing thermal runaway of the adjacent sub modules 21 caused by thermal runaway of the single sub module 21.

In one embodiment, as shown in FIG. 8, FIG. 8 is another partial three-dimensional schematic diagram of the battery assembly provided by some embodiments of the present application. It should be noted that a direction of the case side plates 12 in FIG. 8 is different from that in FIG. 7. A bottom surface of the case side plates 12 in FIG. 8 is turned upside down, so that a side towards the bottom guard plate 11 is exposed for showing a bottom surface of the battery assembly. The case side plates 12 include first side plates 121 disposed opposite to each other and extending along the first direction X. The first side plates 121 are provided with a pressure relief port 120 adjacent to the second end 112 of the bottom guard plate 11, and the pressure relief port 120 is communicated with the pressure relief cavity 100.

That is to say, a side of the first side plates 121 towards the bottom guard plate 11 is provided with the pressure relief port 120 communicated with the pressure relief channels inside the first side plates 121.

As shown in FIG. 7, when thermal runaway occurs in the battery cells 210, the high-temperature gas is discharged along the plurality of pressure relief channels divided by the protruding ribs 110. Since one end of the protruding ribs 110 is flush with the first end, the high-temperature gas is directed to be discharged from the pressure relief cavity 100 of the second end 112 of the bottom guard plate 11. As shown by an arrow in FIG. 7, the arrow shows a flow direction of the high-temperature gas. After reaching the second end 112 of the bottom guard plate 11, the high-temperature gas continues to reach the pressure relief port 120 on the first side plates 121 along the second direction Y, and enters the pressure relief channels inside the first side plates 121 through the pressure relief port 120.

As shown in FIG. 7, in one embodiment, the case side plates 12 further include a partition beam 14 connected to the first side plates 121. An extending direction of the partition beam 14 is perpendicular to an extending direction of the first side plates 121, and the partition beam 14 is spaced from the protruding ribs 110.

By disposing the partition beam 14, the case body 10 may be divided into two accommodating cavities. One accommodating cavity adj acent to the first end 111 of the bottom guard plate 11 is used for accommodating the battery cell module 20, and another accommodating cavity can be used for accommodating other components in the battery assembly, such as a battery management system and a battery thermal management system, etc.

Furthermore, the partition beam 14 may be a hollow structure. By disposing the partition beam 14 as a hollow structure capable of insulating heat, it is possible to prevent heat from spreading from one accommodating cavity to the other.

As shown in FIG. 7, in one embodiment, the case side plates 12 further include second side plates 122 connected to the first side plates 121. An extending direction of the second side plates 122 is perpendicular to the extending direction of the first side plates 121. The first side plates 121 are provided with an explosion-proof valve 1210.

It should be noted that a pressure relief channel is also provided inside the second side plates 122, and the pressure relief channel inside the second side plates 122 communicates with the pressure relief channel inside the first side plates 121. When thermal runaway occurs in the battery cells 210, the high-temperature gas enters the first side plates 121 along the pressure relief port 120 on the first side plates 121, reaches the second side plates 122 along the pressure relief channel inside the first side plates 121, and continues to be discharged along the pressure relief channel inside the second side plates 122 through the explosion-proof valve 1210 disposed on the second side plates 122.

In some embodiments, the second side plates 122 may be manufactured by using an aluminum extruded profile, but is not limited thereto.

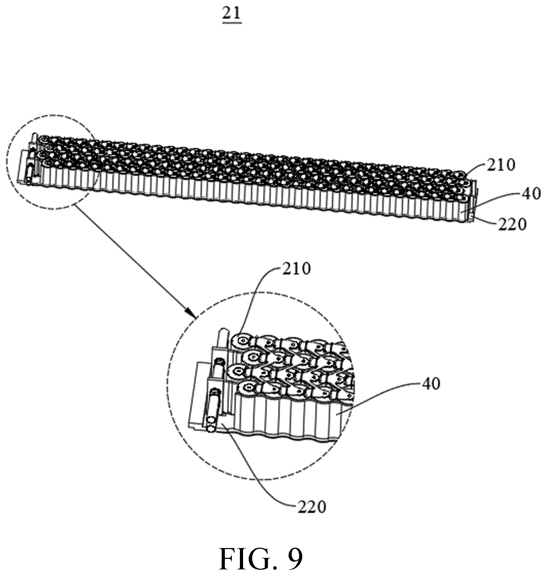

As shown in FIG. 2 and FIG. 9, in one embodiment, a second flame retardant plate 40 adjacent to the battery cells 210 is disposed between two adjacent sub modules 21. A surface of the second flame retardant plate 40 adjacent to the battery cells 210 is a circular arc surface.

A material of the second flame retardant plate 40 and a material of the first flame retardant plate 30 may be same. For example, the material of the second flame retardant plate 40 is mica. The second flame retardant plate 40 can also be other flame retardant materials, and the present application is not limited thereto.

By disposing the second flame retardant plate 40 between the two adjacent sub modules 21, when the battery cells 210 are side exploded, the adjacent battery cells 210 can be prevented from being ignited by high temperature due to the high-temperature gas and flame. The battery cells 210 are side exploded means that the high-temperature gas and flame of the battery cell 210 are ejected from the side perpendicular to the bottom of the battery cells 210 in addition to the pressure relief valve 211 located at the bottom of the battery cells 210. Since side surfaces of the battery cells 210 are adjacent to each other, when the battery cells 210 are side exploded, it is easy to cause the adjacent battery cells 210 to be ignited by the high temperature. The above problems can be avoided by disposing the second flame retardant plate 40.

In one embodiment, the battery cells 210 are cylindrical battery cells, and the end surface of the second flame retardant plate 40 adjacent to the battery cells 210 has a same shape as the battery cells 210. That is, the surface of the second flame retardant plate 40 has a circular arc surface, so that a contact area between the second flame retardant plate 40 and the battery cells 210 is larger, thereby improving a flame retardant effect.

In one embodiment, the battery cells 210 are square battery cells, and the end surface of the second flame retardant plate 40 adjacent to the battery cells 210 has the same shape as the battery cells 210, for example, the surface of the second flame retardant plate 40 is planar.

It should be noted that the present application does not limit the surface shape of the second flame retardant plate 40, which can be adaptively adjusted according to a shape of the end surface of the battery cells 210, so that the contact area between the second flame retardant plate 40 and the battery cells 210 is larger, thereby improving the flame retardant effect.

In all the above embodiments, the material of the first flame retardant plate 30 may be mica. The material of the first flame retardant plate 30 may also be other materials having the flame retardant effect. For example, the material of the first flame retardant plate 30 can be determined according to a UL94-V0 flame retardant grade, which is not limited by the present application.

## Claims

1. A battery assembly, comprising:
a case body (10), comprising a bottom guard plate (11) and case side plates (12), an accommodating cavity is defined by the bottom guard plate (11) and the case side plates (12);
a battery cell module (20), disposed in the accommodating cavity and comprising a plurality of sub modules (21), each of the sub modules (21) comprises a plurality of battery cells (210), an end of each of the battery cells (210) is provided with a pressure relief valve (211), and an opening direction of the pressure relief valve (211) is towards the bottom guard plate (11); and
a first flame retardant plate (30), disposed in the accommodating cavity and located between the battery cell module (20) and the bottom guard plate (11), the first flame retardant plate (30) is provided with a pressure relief hole (310) corresponding to the pressure relief valve (211);
wherein the pressure relief hole (310) penetrates through part of the first flame retardant plate (30), a side of the first flame retardant plate (30) adjacent to the battery cell module (20) is adjacent to the battery cells (210), and a pressure relief cavity (100) is defined between a side of the first flame retardant plate (30) adjacent to the bottom guard plate (11) and the bottom guard plate (11).

2. The battery assembly according to claim 1, wherein the first flame retardant plate (30) comprises at least two flame retardant layers stacked, a part of the flame retardant layers is provided with the pressure relief hole (310), and another part of the flame retardant layers covers the pressure relief hole (310).

3. The battery assembly according to claim 2, wherein a thickness of the part of the flame retardant layers provided with the pressure relief hole (310) is greater than a thickness of the another part of the flame retardant layers.

4. The battery assembly according to claim 2 or claim 3, wherein the flame retardant layers comprise a first flame retardant layer (31) and a second flame retardant layer (32), the first flame retardant layer (31) is located on a side of the second flame retardant layer (32) adjacent to the battery cell module (20);
wherein a thickness of the first flame retardant layer (31) is less than a thickness of the second flame retardant layer (32), and the second flame retardant layer (32) is provided with the pressure relief hole (310) corresponding to the pressure relief valve (211).

5. The battery assembly according to claim 1, wherein the bottom guard plate (11) is provided with at least one protruding rib (110) extending along a first direction (X), an end surface of the protruding rib (110) away from the bottom guard plate (11) abuts with the first flame retardant plate (30), and an orthographic projection of the pressure relief hole (310) on the bottom guard plate (11) is not overlapped with the protruding rib (110).

6. The battery assembly according to claim 5, wherein an end of the protruding rib (110) is flush with a first end (111) of the bottom guard plate (11), and another end of the protruding rib (110) is spaced from a second end (112) of the bottom guard plate (11).

7. The battery assembly according to claim 6, wherein the plurality of sub modules (21) are arranged in a second direction (Y) perpendicular to the first direction (X), and an orthographic projection of each of the sub modules (21) on the bottom guard plate (11) is located between two protruding ribs (110).

8. The battery assembly according to claim 6, wherein the case side plates (12) comprise first side plates (121) disposed oppositely and extending along the first direction (X), each of the first side plates (121) adjacent to the second end (112) of the bottom guard plate (11) is provided with a pressure relief port (120) communicated with the pressure relief cavity (100).

9. The battery assembly according to claim 8, wherein the case side plates (12) further comprise a partition beam (14) connected to the first side plates (121), an extending direction of the partition beam (14) is perpendicular to an extending direction of the first side plates (121), and the partition beam (14) is spaced from the protruding rib (110).

10. The battery assembly according to claim 9, wherein the case side plates (12) further comprise second side plates (122) connected to the first side plates (121), an extending direction of the second side plates (122) is perpendicular to the extending direction of the first side plates (121), and the first side plates (121) are provided with an explosion-proof valve (1210).

11. The battery assembly according to any one of claims 1-3 and 5-8, wherein a second flame retardant plate (40) adjacent to the battery cells (210) is disposed between two adjacent sub modules (21).

12. The battery assembly according to any one of claims 1-3 and 5-8, **characterized in that** a material of the first flame retardant plate (30) is mica.

13. The battery assembly according to any one of claims 1-10, **characterized in that** the plurality of sub modules (21) are connected in parallel or in series.

14. The battery assembly according to any one of claims 1-10, **characterized in that** the case body (10) further comprises a case cover (13), the bottom guard plate (11) is located at a bottom of the case side plates (12), and the case cover (13) is closed on the case side plates (12) to form the accommodation cavity.

15. The battery assembly according to any one of claims 1-10, wherein the battery assembly further comprises a plurality of first flame retardant plates (30), and the plurality of first flame retardant plates (30) are spliced into a large flat plate structure.

16. The battery assembly according to claim 15, wherein an orthographic projection of each of the sub modules (21) on the first flame retardant plate (30) is located within the first flame retardant plate (30).

17. The battery assembly according to any one of claims 1-10, wherein the battery assembly comprises one first flame retardant board (30), and a plane area of the first flame retardant board (30) is less than a plane area of the bottom guard plate (11).

18. The battery assembly according to any one of claims 1-10, wherein the battery cells (210) are cylindrical battery cells, and an edge of the first flame retardant plate (30) is provided with a same circular arc structure as the battery cells (210).

19. The battery assembly according to any one of claims 1-10, **characterized in that** a bracket (220) is disposed between the battery cells (210) and the first flame retardant plate (30), the bracket (220) is provided with a plurality of bearing parts matched with a shape of the battery cells (210), the battery cells (210) are disposed in the bearing parts, and the bearing parts are provided with a through hole corresponding to the pressure relief valve (211).

20. The battery assembly according to any one of claims 1-10, **characterized in that** a connecting rib (113) is disposed on the bottom guard plate (11), and the connecting rib (113) protrudes towards a side of the battery cells (210).
